# FASCICULE DE BREVET EUROPEEN

(11) **EP 3 155 455 B1**
(45) Date de publication et mention de la délivrance du brevet: **27.05.2020**
(21) Numéro de dépôt: 15738314.2
(22) Date de dépôt: 13.07.2015
(51) Int. Cl.: G01T 1/02, G01T 7/00

(54) **PROCÉDÉ ET DISPOSITIF POUR LE SUIVI SPATIAL ET TEMPOREL DE L'EXPOSITION À DES RISQUES**
VERFAHREN UND VORRICHTUNG ZUR RÄUMLICHEN UND ZEITLICHEN VERFOLGUNG VON RISIKOEXPOSITION
METHOD AND DEVICE FOR THE SPATIAL AND TEMPORAL TRACKING OF EXPOSURE TO RISKS

(30) Priorité: 11.07.2014 FR 1456760
(43) Date de publication de la demande: 19.04.2017
(73) Titulaire: Conseils et Etudes en Radioprotection, 50130 Octeville (FR)
(72) Inventeur: ASSELOT, Daniel, 50480 Carquebut (FR); GREUEZ, Jean-Fraçois, 50460 Urville Nacqueville (FR); PETRY, Jacques, 50100 Cherbourg (FR)
(74) Mandataire: Ipside
(86) Numéro de dépôt international: PCT/EP2015/065929
(87) Numéro de publication internationale: WO 2016/012290

(56) Documents cités:
- WO-A2-2006/017796
- WO-A2-2006/018630
- WO-A2-2006/086749
- US-A1- 2009 012 745
- US-A1- 2013 325 357
- BOUDERGUI K ET AL: "Development of a drone equipped with optimized sensors for nuclear and radiological risk characterization", ADVANCEMENTS IN NUCLEAR INSTRUMENTATION MEASUREMENT METHODS AND THEIR APPLICATIONS (ANIMMA), 2011 2ND INTERNATIONAL CONFERENCE ON, IEEE, 6 juin 2011 (2011-06-06), pages 1-9, XP032153558, DOI: 10.1109/ANIMMA.2011.6172936 ISBN: 978-1-4577-0925-8

## Description

L'invention concerne un procédé pour le suivi spatial et temporel de l'exposition à des risques. L'invention est plus particulièrement, mais non exclusivement, dédiée au suivi et à la surveillance des risques d'exposition à des rayonnements ionisants lors d'une intervention de personnels dans une zone soumise à de tels rayonnements. L'invention est cependant adaptable à tout type d'exposition, notamment chimique, susceptible de produire des effets indésirables sur les personnes ou les biens qui y sont exposés, par un effet de cumul de dose.

Lors d'une intervention sur un site exposé à des rayonnements ionisants, notamment à des fins de maintenance, de sûreté ou de démantèlement, une personne ou un objet soumis audit rayonnement est suivie au moyen d'un détecteur individuel, tel qu'un dosimètre, permettant de déterminer la quantité de radiation reçue. Par ailleurs, des balises ou des dispositifs de mesure automatisés permettent de mesurer et d'obtenir, par collecte des données, une cartographie de l'intensité de l'exposition sur le site. Ces informations sont notamment utilisées pour organiser et planifier l'intervention, notamment la rotation des équipes, le nombre de personnes, les moyens nécessaires et les délais de réalisation en fonction des ressources disponibles et des risques encourus par ces ressources du fait de leur exposition, en accord avec les données physiologiques, techniques et législatives pertinentes.

Avant toute intervention sur un site soumis à des rayonnements ionisants, une évaluation dosimétrique prévisionnelle est réalisée à partir de relevés pris dans la zone d'intervention, par des techniciens en radioprotection, telles que des mesures de débit dose et des mesures de contamination. Ces mesures sont reportées sur une cartographie, dite initiale. Puis, lors de chaque étape du chantier susceptible de modifier les conditions d'exposition, une cartographie est à nouveau réalisée. L'obtention de cette cartographie mise à jour implique l'interruption du chantier et l'intervention sur le site des techniciens en radioprotection qui réalisent à nouveau les mesures.

Les personnes intervenant sur le chantier sont toutes équipées d'un dosimètre qui permet de mesurer la quantité de radiations reçue. Le temps ouvert d'intervention de chaque personne est calculé de manière théorique, à partir de la cartographie et de sa zone d'intervention, selon une évaluation dosimétrique prévisionnelle, et corrigé le cas échéant à partir des données relatives à la dose effectivement reçue par la personne, obtenue à partir de son dosimètre. Cette exposition réelle est constatée a posteriori. Ainsi, cette méthode de planification de l'art antérieur ne permet pas d'utiliser de manière optimale les ressources en regard de l'exposition et de la dose reçue par celles-ci. L'incertitude sur l'exposition réelle implique de prendre une marge de sécurité vis-à-vis des normes.

Le document US 5 572 027 décrit un dosimètre combinant un dosimètre, dit actif, apte à mesurer un débit de dose, et un dosimètre, dit passif, apte à mesurer une quantité de radiation reçue.

Le document US 2012 0154170 décrit un dosimètre individuel apte à communiquer en temps réel avec un poste de supervision et ainsi de déterminer la dose de radiation reçue par la personne portant ledit dosimètre.

Le document EP 0 542 561 décrit un dispositif de mesure permettant de réaliser une mesure des intensités de radiation dans un milieu et de la superposer à une image dudit milieu de sorte à renseigner un opérateur sur les risques d'exposition.

Ces dispositifs de l'art antérieur permettent une supervision passive de l'exposition des ressources. Cette supervision est dite passive car elle ne permet pas de contrôler et de maîtriser en temps réel la dose reçue par la personne, notamment en fonction de la variation du débit dose auquel elle est soumise en regard de sa localisation dans la zone d'intervention. Or, notamment dans le cas d'une exposition à des rayonnements ionisants, les opérateurs sont limités en termes de dose reçue, cumulée sur une durée longue, par exemple au cours d'une année. Ainsi, il est possible, avec les dispositifs de supervision de l'art antérieur, qu'un opérateur soit exposé inutilement en regard de sa localisation et de la tâche qu'il réalise, alors qu'il suffirait de déplacer de quelques mètres ledit opérateur pour ménager le potentiel de la ressource.

Le document WO 2006/017796 décrit un système pour la supervision d'un opérateur intervenant dans un milieu exposé à des rayonnements ionisants et vise essentiellement à établir une cartographie en temps réel, destinée au superviseur, des zones exposées du milieu, ne permettant pas de réaliser un suivi historique de l'exposition à l'échelle de l'opérateur.

Le document US 2009/012745 utilise un grand nombre de « porteurs » pour détecter des sources de rayonnements ionisants, mais ne décrit pas un mode de supervision et d'information des opérateurs intervenant dans ce milieu.

Le document WO 2006/086749 décrit un système visant à informer en temps réel un opérateur portant un dosimètre et à l'avertir en cas de dépassement de son niveau d'exposition acceptable, instantané ou cumulé. Le document WO2006/018630 décrit une méthode de planification, d'allocation d'une ressource spécifique à une tâche spécifique réalisée dans un milieu exposé.

L'invention vise à pallier les inconvénients de l'art antérieur et concerne à cette fin un procédé de planification et de replanification des interventions d'un opérateur dans un milieu exposé, selon la revendication indépendante 1.

Le procédé selon l'invention comporte en outre les étapes consistant à :
i. acquérir une cartographie, dite initiale, de l'intensité d'exposition dans le milieu et l'enregistrer dans les moyens de mémoire ;
ii. acquérir selon une première fréquence les informations issues du détecteur individuel associées aux informations de géolocalisation dudit détecteur et les enregistrer dans le fichier historique ;
iii. traiter les données contenues dans le fichier historique par le processeur et obtenir :
   iii.a une mise à jour de la cartographie selon une deuxième fréquence inférieure à la première fréquence et enregistrer cette mise à jour ;
   iii.b une mise à jour des informations d'exposition de l'opérateur selon une troisième fréquence inférieure à la première fréquence, enregistrer cette mise à jour dans un fichier de suivi opérateur ;
iv. afficher les données mise à jour sur les moyens d'affichages du poste de supervision.

Ainsi, ce procédé permet au superviseur d'obtenir une vision globale et rafraîchie régulièrement de la situation spatiale en termes d'intensité d'exposition. Le traitement des données issues des détecteurs des opérateurs intervenant dans le milieu, permet d'obtenir une photographie de la distribution spatiale de l'exposition dans le milieu mais aussi d'analyser l'évolution temporelle de cette exposition et ainsi de détecter des incidents. Le suivi temporel et spatial des opérateurs agissant dans le milieu et le suivi de leur exposition permet d'optimiser la gestion des ressources en fonction des tâches à réaliser et de l'exposition en résultant.

Avantageusement, le procédé objet de l'invention met en œuvre un système comportant un fichier de planification et comporte une étape consistant à :
v. acquérir une planification initiale et l'enregistrer dans le fichier de planification.

Ainsi, le superviseur est en mesure de comparer à tout moment l'exposition des opérateurs en regard de la tâche réalisée et des tâches restant à réaliser.

Avantageusement, le procédé objet de l'invention met en œuvre un système comprenant un détecteur fixe et comprend les étapes consistant à :
vi. acquérir une mesure de l'intensité d'exposition dans la zone couverte par le détecteur fixe selon une quatrième fréquence ;
vii. mettre à jour la cartographie à partir des informations acquises à l'étape vi).

Ainsi, la mesure réalisée par le détecteur fixe et les mesures issues des détecteurs individuels sont corrélées afin d'affiner la cartographie.

Avantageusement, le procédé objet de l'invention met en œuvre un système comprenant un dispositif de mesure mobile et comprend les étapes consistant à :
viii. déplacer le dispositif de mesure mobile jusqu'à une localisation déterminée dans le milieu ;
ix. acquérir une mesure de l'exposition réalisée par le dispositif de mesure mobile ;
x. mettre à jour la cartographie à partir de la mesure réalisée à l'étape ix).

Ainsi, le dispositif de mesure mobile permet d'obtenir une mesure fiable dans une zone du milieu non couverte par des détecteurs individuels ou par un détecteur fixe, par exemple, une zone de passage ou le temps de station des opérateurs est insuffisant pour l'obtention d'une mesure fiable, ou de suppléer un détecteur fixe dont les mesures semblent erronées, par exemple parce qu'un objet ou un opérateur fait écran à la mesure.

Avantageusement, le procédé objet de l'invention comprend une étape consistant à :
xi. transmettre des informations depuis le poste de supervision sur le terminal de liaison.

Ainsi l'opérateur est connecté en permanence avec le poste de supervision, et dispose d'une synthèse d'informations relatives à sa situation lui permettant d'améliorer sa productivité et améliorant ses conditions d'hygiène et de sécurité.

Avantageusement, le procédé objet de l'invention comprend une étape consistant à :
xii. afficher des informations issues de la caméra de vidéosurveillance sur les moyens d'affichage du poste de supervision.

Ainsi le superviseur suit en temps réel les conditions d'intervention.

Selon un mode de réalisation du procédé objet de l'invention :
- la première la période de transmission des mesures correspondant à la première fréquence est inférieure à 1 seconde ;
- la période de rafraîchissement correspondant à la deuxième et à la troisième fréquence est inférieure à 5 secondes.

Ainsi, l'information issue des détecteurs individuels compense sa précision inférieure par un grand nombre de mesures, lesquelles font l'objet d'un traitement, notamment par moyennage, pour en améliorer la robustesse.

Avantageusement, la période correspondant à la quatrième fréquence est inférieure à 10 secondes, et le traitement réalisé à l'étape iv) intègre la mesure d'exposition réalisée par le détecteur fixe.

Avantageusement, le procédé objet de l'invention comporte des étapes consistant à :
xiii. acquérir la géolocalisation de détecteur individuel selon une cinquième fréquence supérieure à la première fréquence ;
xiv. calculer la vitesse de déplacement de l'opérateur auquel est lié ledit détecteur.

Ainsi, les mesures obtenues dans des zones où l'opérateur se déplace de manière trop rapide pour assurer la fiabilité de la mesure ne sont pas prises en compte.

Plus précisément, selon un mode de réalisation avantageux, le procédé objet de l'invention comprend avant l'enregistrement de l'étape ii) des données issues du détecteur individuel, un test de cohérence de données prenant en compte la vitesse de déplacement de l'opérateur et plusieurs mesures successives de sa géolocalisation. Ainsi, les mesures ne correspondant pas à des déplacements physiquement réalisables par un opérateur sont considérées comme aberrantes et ne sont pas prises en compte.

Avantageusement, l'étape iv) de traitement, intègre la mesure obtenue par le dispositif mobile. Ainsi le procédé objet de l'invention combine les différentes mesures pour obtenir une image fidèle des conditions d'exposition dans le milieu sans nécessiter l'interruption du chantier pour obtenir cette information.

Avantageusement, l'étape iv) de traitement du procédé objet de l'invention comprend le regroupement des mesures par localisation et par date et le traitement des mesures par groupe ainsi obtenu. Ainsi, le procédé objet de l'invention combine un grand nombre de mesures tant selon la dimension spatiale que la dimension temporelle afin d'obtenir d'une image fiable et régulièrement rafraîchie de la situation.

Avantageusement, le procédé objet de l'invention comporte une étape consistant à :
xv. transmettre à la montre connectée de l'opérateur une information de sorte à colorer son cadran d'une couleur reflétant l'intensité d'exposition de la cartographie dans la zone où se trouve l'opérateur.

Ainsi, l'opérateur est informé de l'intensité de l'exposition à laquelle il est exposé par la transmission d'une quantité d'information très réduite.

L'invention est exposée ci-après selon ses modes de réalisation préférés, nullement limitatifs, et en référence aux figures 1 à 3 dans lesquelles :
- la figure 1 montre selon une vue de dessus un exemple de milieu d'intervention faisant l'objet d'une cartographie au moyen du procédé objets de l'invention ;
- la figure 2 est un organigramme d'un exemple de réalisation du procédé objet de l'invention ;
- et la figure 3 est un exemple de réalisation de l'affichage mis à disposition du superviseur par le dispositif objet de l'invention.

Dans tout le texte les termes « exposition » et « dose » sont des synonymes, de même que les termes « débit-dose » et « intensité d'exposition ».

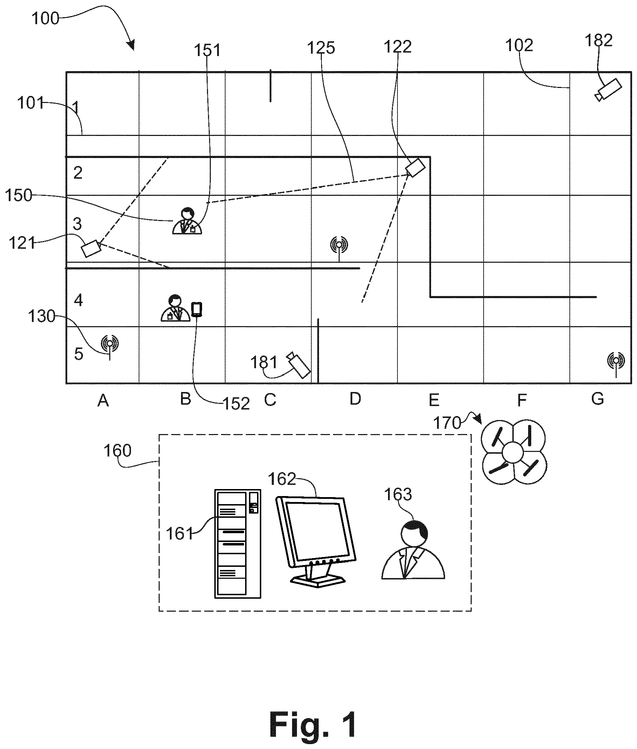

Figure 1, l'invention est ici exposée dans le cadre d'un milieu soumis à des rayonnements ionisants, toutefois, le procédé et le dispositif objets de l'invention sont adaptables à un milieu soumis à tout type d'exposition notamment chimique ou biologique (gaz, agents pathogènes...) ou physique (bruit, température...) et dont l'exposition est mesurable par des détecteurs individuels. L'invention est également exposée dans le cadre de la supervision d'un opérateur humain, alternativement l'opérateur est un robot. Finalement, par facilité de représentation, l'application du procédé et du dispositif objet de l'invention est montrée selon une représentation plane du milieu (100) d'intervention, mais l'invention est parfaitement adaptée à une représentation spatiale tridimensionnelle de ce milieu, et à une prise en compte spatiale tridimensionnelle de l'exposition.

Le milieu d'intervention (100) est surveillé par un superviseur (163) se trouvant dans un poste (160) de supervision, séparé, voir éloigné dudit milieu (100) d'intervention. Selon cet exemple de réalisation, le superviseur (163) reçoit des informations sur les conditions d'intervention par un dispositif informatique (161, 162) comprenant un ordinateur (161) relié par un réseau aux différents dispositifs se trouvant dans le milieu (100) d'intervention, et des moyens (162) d'affichage. L'ordinateur (161) comporte un processeur, des moyens de mémoire et des pilotes pour gérer un réseau local et le pilotage des moyens (162) d'affichage. Par l'intermédiaire du réseau local, le superviseur (163) communique également avec les différents dispositifs et les opérateurs (150) présents dans le milieu d'intervention.

Selon un exemple de réalisation du procédé objet de l'invention, le milieu (100) d'intervention est divisé en zones, ici par un quadrillage de lignes (101, 102) horizontales et verticales dans le plan. La carte du milieu d'intervention est obtenue à partir d'un plan ou d'une modélisation tridimensionnelle du site d'intervention, par des relevés réalisés sur le terrain préalablement à l'intervention, ou par une combinaison de ces moyens.

Selon cet exemple de réalisation, chaque zone, ou ensemble de zones, ainsi délimitées est couvert, d'une part par un ou plusieurs détecteurs ou balises fixes (121, 122) de mesure de l'intensité d'exposition, chacune selon un volume (125) de visibilité déterminé, et par un dispositif de géolocalisation comprenant, selon cet exemple de réalisation, des antennes (130) interagissant avec une étiquette à radio fréquence (non représentée), dite Tag RFID, portée par chaque opérateur et par chaque détecteur présent dans le milieu (100) d'intervention. Selon un exemple de réalisation, chaque balise (121, 122) fixe comporte un Tag RFID permettant sa localisation précise dans l'espace. Chaque opérateur (150) évoluant dans l'espace (100) d'intervention porte un détecteur (151) individuel, par exemple un dosimètre permettant la mesure d'une exposition cumulée, ou de préférence, un radiamètre qui permet de mesurer une intensité d'exposition, c'est-à-dire un flux, ainsi ledit détecteur est apte à mesurer une intensité d'exposition. Ledit détecteur individuel comporte un Tag RFID. Chaque appareil de mesure est connecté au réseau local, ou LAN, relié aux moyens (161) informatiques du poste (160) de supervision. Selon un exemple de réalisation non limitatif le réseau local est un réseau sans fil selon le protocole WIFI®.

Un dispositif de mesure mobile (170), ici un drone, connecté également au réseau local, permet d'obtenir une mesure de l'exposition en un point précis. Selon un autre mode de réalisation, le dispositif de mesure mobile est constitué par un opérateur portant un dispositif de mesure spécifique et connecté par radio au poste (160) de supervision. Le lancement du dispositif de mesure mobile est décidé par le superviseur (163), notamment en fonction des informations affichées sur les moyens (162) d'affichage du poste de supervision.

Selon un autre mode de réalisation, le dispositif (170) de mesure mobile tel qu'un robot est apte à se déplacer de manière autonome dans tout ou partie du milieu d'intervention. Selon ce mode de réalisation, ledit dispositif mobile comporte ses propres moyens de localisation ou de reconnaissance de l'environnement dans le milieu d'intervention, des moyens de mesure de l'intensité d'exposition et des moyens de mémoire. Ainsi, ce dispositif est apte à réaliser des mesures géolocalisées et datée de l'intensité d'exposition dans des zones du milieu d'intervention, de les enregistrer dans sa mémoire interne avec la date et leur localisation puis de décharger ces données vers l'ordinateur '(161) soit par liaison directe avec cet ordinateur soit via le réseau local. Un tel robot permet, par exemple, d'effectuer de manière autonome des tâches planifiées de mesure de l'intensité d'exposition dans des zones spécifiques, sans avoir à détacher une équipe de radioprotection à cette fin. Par exemple, ledit robot effectue une mesure de l'intensité d'exposition dans les vestiaires des opérateurs lors des changements d'équipes.

Une ou plusieurs caméras (181, 182) de vidéosurveillance, connectées au poste (160) de supervision par le réseau LAN ou par un réseau séparé, permettent au superviseur (163) de surveiller visuellement l'espace d'intervention.

Chaque opérateur (150) est connecté au superviseur (163) et plus généralement au poste (160) de supervision par un terminal (152) de liaison, connecté au réseau LAN, qui permet d'échanger des informations entre ledit terminal et le poste (160) de supervision. Selon des variantes de réalisation, ledit terminal de liaison prend la forme d'un écran collectif, d'une tablette informatique, ou d'un dispositif de vision, lunettes ou visière de casque, comprenant un affichage d'informations. Selon cette dernière variante de réalisation, l'affichage dans le dispositif de vision permet de superposer des informations, dites de réalité augmentée, à la vision de l'opérateur (150). De manière complémentaire et facultative, chaque opérateur est connecté par radio au superviseur (163).

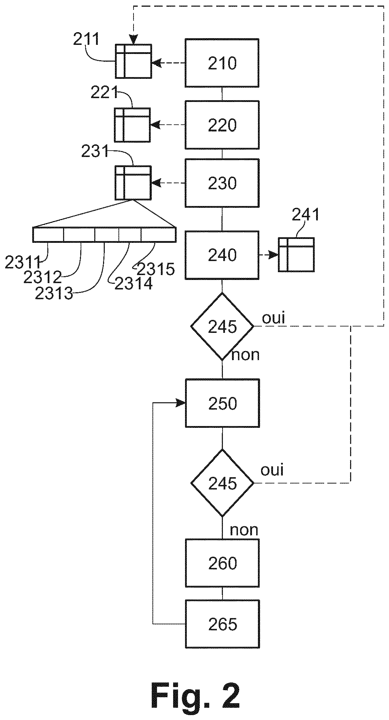

Figure 2, selon une première (210) étape de la mise en œuvre du procédé objet de l'invention, une cartographie initiale de l'exposition dans le milieu d'intervention est obtenue, par l'intermédiaire d'une équipe de radioprotection dépêchée sur les lieux, ou par l'utilisation des moyens fixes ou mobiles (121, 122, 170, figure 1) présents sur le lieu. Ce relevé initial permet d'obtenir une cartographie de l'exposition sous la forme d'une valeur de l'intensité d'exposition dans chaque zone de la carte délimitée par le quadrillage. De la même manière que selon l'art antérieur, cette cartographie initiale est utilisée pour réaliser, au cours d'une étape de planification (220), une planification initiale de l'intervention. La cartographie initiale, la planification initiale et les objectifs dosimétriques initiaux sont enregistrés respectivement dans un fichier (211) de cartographie et dans un fichier (221) de planification. Lors du démarrage du chantier, chaque opérateur intervenant selon la planification initiale est équipé d'un détecteur individuel et de moyens de géolocalisation. Selon un exemple de réalisation, toutes les secondes, l'ordinateur du poste de supervision reçoit, via le réseau LAN, une information sur le débit-dose mesuré par chaque dosimètre présent dans le milieu d'intervention en même temps que les informations de géolocalisation correspondant au lieu de réalisation de la mesure. L'ordinateur du poste de supervision réalise l'acquisition (230) de ces informations et leur enregistrement dans un fichier (231), dit historique. Chaque enregistrement du fichier (231) historique comporte, à titre d'exemple, un identifiant (2311) de l'opérateur, la date (2312) de la mesure, la localisation (2313) de la mesure, la valeur (2314) mesurée par le capteur de mesure de l'exposition, et des informations (2315) complémentaires, dites de paramétrage, comme le type de radiamètre ayant réalisé la mesure. Selon un mode de réalisation alternatif, ces informations sont comprises dans des fichiers différents. Dans le contexte de l'invention, la date désigne le repérage temporel précis d'un événement, c'est-à-dire l'année, le mois, le jour et l'heure avec la précision requise.

Les informations enregistrées dans le fichier (231) historique sont traitées au cours d'une étape (240) de traitement. Selon un exemple de réalisation, ce traitement comprend un regroupement des mesures du fichier historique. Un premier regroupement est réalisé par opérateur et par date. Ce regroupement permet d'obtenir pour un opérateur donné, l'intensité d'exposition à laquelle il a été exposé au cours du temps. La sommation de cette intensité sur le temps, en partant d'une date d'origine, permet, selon cet exemple de réalisation, de déterminer, pour cet opérateur, la quantité de radiations ionisantes auxquelles il a été exposé jusqu'à la date finale de sommation. Selon la nature du détecteur individuel, la dose reçue par l'opérateur est extraite directement du détecteur individuel sans sommation numérique. Ce résultat est stocké dans un fichier (241) de suivi de l'opérateur. Un deuxième regroupement des mesures est réalisé par date et par localisation. En effet, les opérateurs évoluant dans le milieu d'intervention se déplacent dans les zones initialement délimitées. Ainsi les mesures prises au fil du temps par l'intermédiaire des détecteurs individuels sont regroupées selon les zones délimitées par le quadrillage. Ainsi, les mesures sont regroupées pour chaque zone. À titre d'exemple non limitatif, la mesure correspondant aux détecteurs individuels est prise toutes les 0,1 seconde soit une fréquence de 10 s⁻¹, et chaque zone comprend un regroupement de toutes les mesures réalisées dans cette zone pendant une durée d'au moins 1 seconde dite temps d'interpolation. Après ce regroupement et selon cet exemple de réalisation, un test (245) est réalisé sur le nombre de mesures réalisées dans la zone considérée au cours de ce temps défini, et éventuellement sur la répartition des mesures dans cette zone. À titre d'exemple non limitatif, ledit test consiste à vérifier qu'au moins 30 mesures ont été réalisées dans ladite zone au cours du temps d'interpolation et que lesdites mesures sont réparties dans un périmètre délimitant une surface couvrant au moins un tiers de la surface de la zone. Si ces conditions sont vérifiées, les mesures ainsi regroupées sont traitées afin de déterminer l'intensité d'exposition dans la zone considérée. Ces conditions sont données à titre indicatif et sont, en pratique, déterminées par la nature de l'exposition dans le site d'intervention. Le fichier (211) de cartographie est alors mis à jour pour la zone considérée. À titre d'exemple, les balises ou détecteurs fixes, effectuent une mesure toutes les 10 secondes soit une fréquence de mesure de 0,1 s⁻¹. Ces mesures sont moins sujettes à des variations stochastiques. L'intensité d'exposition dans la zone considérée est calculée en combinant les mesures issues des détecteurs individuels et les mesures issues des détecteurs fixes en pondérant l'importance relative desdites mesures en fonction, par exemple, de l'éloignement temporel des mesures et de la date d'évaluation de la mise à jour. Toujours selon cet exemple de réalisation, au cours d'une étape (255) test, la valeur de l'intensité d'exposition ainsi calculée dans la zone considérée est comparée à la valeur précédente, obtenue pour cette zone. Si l'évolution entre ces deux mesures reste dans une proportion préétablie, la cartographie (211) est mise à jour. Dans le cas où l'évolution sort de la proportion admise, alors une alarme est affichée dans la zone considérée, laquelle alarme informe le superviseur d'une évolution qui semble anormale et lui propose, par exemple, d'envoyer le dispositif mobile afin d'effectuer une vérification. Dans ce cas, le dispositif de mesure mobile est envoyé (260) sur zone, fait l'acquisition (265) d'une nouvelle mesure concernant ladite zone, laquelle est combinée (250) avec les informations issues des autres capteurs afin de déterminer l'intensité d'exposition dans ladite zone et de mettre à jour la cartographie.

Selon cet exemple de réalisation, la fréquence d'acquisition de la géolocalisation du détecteur individuel d'un opérateur est réalisée selon une fréquence suffisamment élevée par exemple, supérieur à 20 s⁻¹, de sorte à calculer la vitesse de déplacement dudit opérateur, sa trajectoire et son orientation dans le milieu. Ces informations sont utilisées pour fiabiliser les mesures, par exemple, en éliminant les mesures pour lesquelles le temps de passage de l'opérateur dans la zone est trop court pour que lesdites mesures puissent être considérées comme valables. D'une manière générale, les mesures brutes issues des détecteurs portées par les opérateurs sont filtrées de sorte à en éliminer les points de mesure supposés aberrants, en tenant compte des informations de géolocalisation et de date. Ainsi, par exemple, deux mesures successives, issues du même détecteur mais séparées d'une distance qui ne peut être parcourue physiquement par un opérateur dans le temps qui les sépare, sont considérées comme aberrantes et ne sont pas prises en compte. Une telle situation est susceptible de se produire lorsque deux balises de géolocalisation proches l'une de l'autre sont séparées par un obstacle et captent successivement le signal de l'opérateur.

En pratique, plusieurs opérateurs se trouvent et se déplacent dans le milieu d'intervention de sorte que même en supprimant les mesures jugées aberrantes, la quantité d'information disponible est suffisante pour dresser et mettre à jour la cartographie.

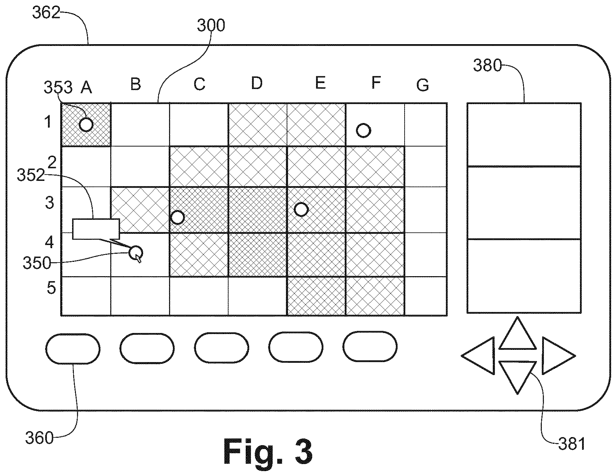

Figure 3, pour la réalisation de la cartographie d'exposition actualisée, le volume du milieu d'intervention surveillé est discrétisé en mailles, par exemple en mailles cubiques (non représentées). Ainsi chaque zone plane (A-1, D-3 ...) de la cartographie, regroupe plusieurs mailles dans le volume projeté de ladite zone. La mesure réalisée par un détecteur est localisée tridimesionnellement c'est-à-dire à la fois par ses coordonnées cartésiennes dans le plan mais aussi son altitude. Chaque mesure est datée. Un paramètre de construction de la cartographie défini un temps de validité d'une mesure, par exemple, 20 minutes. Ainsi, à l'issue de ce temps de validité, la mesure est oubliée. L'intensité de l'exposition dans une zone, par exemple D-3, de la cartographie, est définie en combinant les mesures obtenues dans les mailles contenues dans le volume projeté de cette zone, par exemple en considérant l'intensité d'exposition maximale mesurée dans cet ensemble mailles ou toute autre pondération des mesures.

Selon un exemple de réalisation, l'écran (362) de supervision du superviseur comprend un affichage de la cartographie (300) du milieu, dans lequel les zones sont représentées par des couleurs illustrant l'intensité de l'exposition dans ladite zone. Chaque opérateur évoluant dans le milieu d'intervention, est représenté sur la cartographie par une marque (350) en fonction de sa localisation dans ledit milieu. En cliquant sur une marque, le superviseur obtient des informations (352) sur ledit opérateur, notamment la tâche qu'il est censé réaliser en fonction de la planification, sa localisation précise, la dose de rayonnement reçue, la fin théorique de la tâche qu'il doit réaliser. Une zone d'affichage (380) permet de visualiser les images issues des caméras de vidéosurveillance, lesquelles caméras sont orientables au moyen de boutons (381) virtuels. D'autres boutons virtuels (360) permettent au superviseur d'effectuer d'autres actions, par exemple, adresser une alarme, lancer le dispositif mobile de détection selon un circuit de contrôle préétabli.

À titre d'exemple, lorsqu'un opérateur, représenté par sa marque (353), se trouve dans une zone (A-1) soumise à une intensité particulièrement élevée, alors que des zones contiguës sont faiblement exposées, le superviseur consulte, en cliquant sur la marque (353) correspondante, la nature de la tâche réalisée par l'opérateur et, le cas échéant, observe par l'intermédiaire d'une des caméras de vidéosurveillance l'occupation réelle de l'opérateur. Si cette occupation, ou si la tâche exécutée, ne nécessite pas une telle exposition, le superviseur adresse un message audit opérateur afin que celui-ci quitte la zone. Par l'observation vidéo, ou par l'envoi du dispositif de mesure mobile, le superviseur est également en mesure de détecter l'origine de cette exposition, particulièrement si celle-ci n'était pas prévue, par exemple, suite au déplacement dans cette zone d'objets contaminés.

Selon un exemple de réalisation chaque opérateur intervenant sur le site dispose d'un terminal connecté, par exemple une « montre » connectée soit directement au réseau LAN soit par l'intermédiaire de bornes de communication à courte portée, dites de proximité, de type Bluetooth® ou Zigbee® disposées dans le site d'intervention, et dont l'écran se colore de la couleur correspondant à l'intensité d'exposition de la zone sur la cartographie, lorsque ledit opérateur se trouve dans la zone physique correspondante.

La description ci-avant et les exemples de réalisation montrent que l'invention atteint les objectifs visés, en particulier, le procédé objet de l'invention permet de superviser à distance et en temps quasi-réel un chantier en site exposé. À cette fin, le procédé objet de l'invention met en œuvre les fonctions principales suivantes :
- la géolocalisation : des opérateurs, des capteurs d'intensité d'exposition et des éventuels matériels opérant sur le site d'intervention, notamment les robots ou les drones ;
- la communication et la centralisation des données
- le calcul en temps quasi-réel de la cartographie et des conditions d'exposition
- le retour d'information vers les opérateurs intervenant sur le site d'intervention. Ainsi, le procédé objet de l'invention permet notamment de planifier et de replanifier les interventions des personnes agissant sur le chantier de sorte que celles-ci puissent réaliser le plus de tâches possible dans les limites de l'exposition autorisée pour ces personnes. Ainsi, le procédé objet de l'invention permet l'utilisation efficace du potentiel d'exposition de chaque intervenant.

## Revendications

1. Procédé pour la planification et la replanification des interventions d'un opérateur (150) dans un milieu (100) exposé, notamment à des rayonnements ionisants, mettant en oeuvre un système, comportant :
a. un centre (160) de supervision comprenant un processeur (161) des moyens de mémoire, des moyens d'affichage (162) et des moyens d'accès à un réseau ;
b. un détecteur (151) individuel, notamment un radiamètre, lié à l'opérateur, apte à obtenir une mesure de l'intensité de l'exposition, et comportant des moyens pour adresser ladite mesure sur le réseau à destination du centre (160) de supervision ;
d. des moyens (130) de géolocalisation du détecteur (151) individuel, comprenant un moyen d'identification lié audit détecteur, notamment une étiquette à radiofréquence ;
f. un terminal (152) de liaison, relié au réseau, et à disposition de l'opérateur (150) ;
g. un fichier (221) de planification, enregistré dans les moyens de mémoire et comprenant la liste, la durée, la localisation et l'ordonnancement des tâches de l'opérateur ;
h. un détecteur (121, 122) fixe apte à mesurer une intensité d'exposition, reliée au réseau, de localisation fixe dans le milieu et visant une zone dudit milieu ;
ledit procédé comprenant des étapes consistant à :
i. acquérir (210) une cartographie, dite initiale, de l'intensité d'exposition dans le milieu et l'enregistrer dans les moyens de mémoire ;
ii. acquérir (230) selon une première fréquence les informations issues du détecteur individuel associées aux informations de géolocalisation dudit détecteur et les enregistrer dans un fichier (231) historique ;
iii. traiter (240) les données contenues dans le fichier historique par le processeur et obtenir :
iii.a une mise à jour de la cartographie (211) selon une deuxième fréquence inférieure à la première fréquence et enregistrer cette mise à jour ;
iii.b une mise à jour des informations d'exposition de l'opérateur selon une troisième fréquence inférieure à la première fréquence, enregistrer cette mise à jour dans un fichier (241) de suivi opérateur ;
iv. afficher les données mise à jour sur les moyens d'affichages du poste de supervision.
v. acquérir (220) une planification initiale et l'enregistrer dans le fichier (221) de planification ;
vi. acquérir (250) une mesure de l'intensité d'exposition dans la zone couverte par le détecteur fixe selon une quatrième fréquence ;
vii. mettre à jour la cartographie à partir des informations acquises à l'étape vi) ;
**caractérisé en ce que** l'étape iii) (240) de traitement comprend le regroupement des mesures par opérateur, par localisation et par date et le traitement des mesures par groupe ainsi obtenus, et comprend une étape consistant à effectuer la sommation de l'exposition sur le temps, en partant d'une date d'origine, afin de déterminer, la quantité de radiations ionisantes auxquelles l'opérateur a été exposé jusqu'à une date finale de sommation, et comparer l'exposition de l'opérateur en regard de la tâche réalisée et des tâches restant à réaliser.

2. Procédé selon la revendication 1, dans lequel le système comprend un dispositif (170) de mesure dans le milieu apte à mesurer une intensité d'exposition et comportant des moyens de géolocalisation, comprenant les étapes consistant à :
viii. déplacer (260) le dispositif de mesure mobile jusqu'à une localisation déterminée dans le milieu ;
ix. acquérir (265) une mesure de l'exposition réalisée par le dispositif de mesure mobile ;
x. mettre à jour la cartographie à partir de la mesure réalisée à l'étape ix).

3. Procédé selon la revendication 1, comportant une étape consistant à :
xi. transmettre des informations depuis le poste de supervision sur le terminal de liaison.

4. Procédé selon la revendication 1, dans lequel le système comporte une caméra (181, 182) de vidéosurveillance, reliée au réseau, et observant une zone du milieu, comprenant une étape consistant à :
xii. afficher des informations issues de la caméra de vidéosurveillance sur les moyens d'affichage du poste de supervision et dans lequel des informations issues de la cartographie sont superposées à l'affichage issue de la caméra de vidéosurveillance.

5. Procédé selon la revendication 1, dans lequel:
- la première période de transmission des mesures correspondant à la première fréquence est inférieure à 1 seconde ;
- la période de rafraîchissement correspondant à la deuxième et à la troisième fréquence est inférieure à 5 secondes.
- la période correspondant à la quatrième fréquence est inférieure à 10 secondes.

6. Procédé selon la revendication 1, comprenant des étapes consistant à :
xiii. acquérir la géolocalisation de détecteur individuel selon une cinquième fréquence supérieure à la première fréquence ;
xiv. calculer la vitesse de déplacement de l'opérateur auquel est lié ledit détecteur ;
et comprenant avant l'enregistrement à l'étape ii) des données issues du détecteur individuel un test de cohérence de données prenant en compte la vitesse de déplacement de l'opérateur et plusieurs mesures successives de sa géolocalisation.

7. Procédé selon la revendication 2, dans lequel le traitement réalisé à l'étape iii) de traitement intègre la mesure d'intensité d'exposition réalisée par le détecteur fixe et la mesure obtenue par le dispositif mobile.

8. Procédé selon la revendication 1, dans lequel le terminal (152) de liaison est une tablette informatique, un dispositif optique de réalité augmentée, notamment une visière de casque, ou une montre connectée.

9. Procédé selon la revendication 8, dans lequel le terminal mobile est une montre connectée, comprenant une étape consistant à :
xv. transmettre à la montre de l'opérateur une information de sorte à colorer son cadran d'une couleur reflétant l'intensité d"exposition de la cartographie dans la zone où se trouve l'opérateur.

## Patentansprüche

1. Verfahren zum Planen und zum Umplanen des Einsatzes einer Bedienungsperson (150) in einem, insbesondere ionisierenden Strahlungen, ausgesetzten Milieu (100), das ein System umsetzt das Folgendes beinhaltet:
a. eine Überwachungszentrale (160), einen Prozessor (161), Speichermittel, Anzeigemittel (162) und Zugriffsmittel auf ein Netzwerk umfassend;
b. einen einzelnen Detektor (151), insbesondere einen Strahlungsmesser, in Verbindung mit der Bedienungsperson, der imstande ist, eine Aussetzungsstärkemessung zu erhalten, und Mittel zum Adressieren der Messung innerhalb des Netzwerks zur Überwachungszentrale (160) beinhaltend;
d. Mittel (130) zum Geolokalisieren des einzelnen Detektors (151), ein Identifizierungsmittel in Verbindung mit dem Detektor, insbesondere eine Funkfrequenzkennung umfassend;
f. ein Verbindungsendgerät (152), das an das Netzwerk angeschlossen ist, und der Bedienperson (150) zur Verfügung steht;
g. eine Planungsdatei (221) die in den Speichermitteln gespeichert ist, und die Liste, die Dauer, die Lokalisierung und die Ablaufplanung für die Aufgaben der Bedienperson umfasst;
h. einen festen Detektor (121, 122), der imstande ist, eine Aussetzungsstärke zu messen, an das Netzwerk angeschlossen, mit fester Lokalisierung in dem Milieu und auf eine Zone des Milieus ausgerichtet;
wobei das Verfahren Schritte umfasst, die aus Folgendem bestehen:
i. Erfassen (210) einer sogenannten anfänglichen Kartografie der Aussetzungsstärke in dem Milieu und Speichern derselben in den Speichermitteln;
ii. Erfassen (230) gemäß einer ersten Frequenz der Informationen, die aus dem einzelnen Detektor stammen, die den Geolokalisierungsinformationen des Detektors zugeordnet sind, und Speichern derselben in einer Historiendatei (231);
iii. Verarbeiten (240) der in der Historiendatei enthaltenen Daten durch den Prozessor und Erhalten von Folgendem:
iii.a einer Aktualisierung der Kartografie (211) gemäß einer zweiten Frequenz, kleiner als die erste Frequenz, und Speichern dieser Aktualisierung;
iii.b einer Aktualisierung der Aussetzungsinformationen der Bedienperson gemäß einer dritten Frequenz, kleiner als die erste Frequenz, Speichern dieser Aktualisierung in einer Betreuungsdatei (241) für die Bedienperson;
iv. Anzeigen der Aktualisierungsdaten in den Anzeigemitteln der Überwachungsstation.
v. Erfassen (220) einer anfänglichen Planung und Speichern derselben in der Planungsdatei (221);
vi. Erfassen (250) einer Messung der Aussetzungsstärke in der durch den festen Detektor abgedeckten Zone gemäß einer vierten Frequenz;
vii. Aktualisieren der Kartografie ausgehend von den in Schritt vi) erfassten Informationen;
**dadurch gekennzeichnet, dass** der Schritt iii) (240) des Verarbeitens den Zusammenschluss der Messungen nach Bedienperson, nach Lokalisierung und nach Datum, und das Verarbeiten der Messungen nach so erhaltenen Gruppen umfasst, und einen Schritt umfasst, der darin besteht, die Summierung der Aussetzung über die Zeit durchzuführen, indem man von einem ursprünglichen Datum ausgeht, um die Menge der ionisierenden Strahlungen zu bestimmen, denen die Bedienperson bis zum abschließenden Datum der Summierung ausgesetzt war, und die Aussetzung der Bedienperson gegenüber der realisierten Aufgabe und der Aufgaben zu vergleichen, die noch zu realisieren sind.

2. Verfahren nach Anspruch 1, wobei das System eine Vorrichtung (170) zum Messen in dem Milieu umfasst, die imstande ist, eine Aussetzungsstärke zu messen und Geolokalisierungsmittel beinhaltet, die Schritte umfassend, die aus Folgendem bestehen:
viii. Versetzen (260) der mobilen Messvorrichtung bis zu einer bestimmten Lokalisierung in dem Milieu;
ix. Erfassen (265) einer durch die mobile Messvorrichtung realisierten Messung der Aussetzung;
x. Aktualisieren der Kartografie ausgehend von der in Schritt ix). realisierten Messung;

3. Verfahren nach Anspruch 1, einen Schritt beinhaltend, der aus Folgendem besteht:
xi. Übertragen der Informationen von der Überwachungsstation zum Verbindungsendgerät.

4. Verfahren nach Anspruch 1, wobei das System eine Kamera (181, 182) zur Videoüberwachung beinhaltet, die mit dem Netzwerk verbunden ist, und eine Zone des Milieus beobachtet, einen Schritt umfassend, der aus Folgendem besteht:
xii. Anzeigen der Informationen, die aus der Kamera zur Videoüberwachung stammen, in den Anzeigemitteln der Überwachungsstation und wobei die Informationen, die aus der Kartografie stammen, über die Anzeige gelegt werden, die aus der Kamera zur Videoüberwachung stammt.

5. Verfahren nach Anspruch 1, wobei:
- der erste Übertragungszeitraum der Messungen, der der ersten Frequenz entspricht, kleiner als 1 Sekunde ist;
- der Zeitraum der Auffrischung, der der zweiten und der dritten Frequenz entspricht, kleiner als 5 Sekunden ist;
- der Zeitraum, der der vierten Frequenz entspricht, kleiner als 10 Sekunden ist.

6. Verfahren nach Anspruch 1, Schritte umfassend, die aus Folgendem bestehen:
xiii. Erfassen der Geolokalisierung des einzelnen Detektors gemäß einer fünften Frequenz, die größer als die erste Frequenz ist;
xiv. Berechnen der Fortbewegungsgeschwindigkeit der Bedienperson, mit der der Detektor verbunden ist;
und vor dem Speichern in Schritt ii) der Daten, die aus dem einzelnen Detektor stammen, einen Kohärenztest der Daten umfassend, der die Fortbewegungsgeschwindigkeit der Bedienperson und mehrere aufeinanderfolgende Messungen seiner Geolokalisierung berücksichtigt.

7. Verfahren nach Anspruch 2, wobei die im Verarbeitungsschritt iii) realisierte Verarbeitung die Aussetzungsstärkemessung, die durch den festen Detektor realisiert wird, und die Messung integriert, die von der mobilen Vorrichtung erhalten wird.

8. Verfahren nach Anspruch 1, wobei das Verbindungsendgerät (152) ein IT-Tablet-Computer, eine optische Vorrichtung für erweiterte Realität, insbesondere ein Helmvisier, oder eine smarte Uhr ist.

9. Verfahren nach Anspruch 8, wobei das mobile Endgerät eine smarte Uhr ist, einen Schritt umfassend, der aus Folgendem besteht:
xv. Übertragen auf die Uhr der Bedienperson einer Information, um deren Bildschirm in einer Farbe einzufärben, die die Aussetzungsstärke der Kartografie in der Zone wiedergibt, in der sich die Bedienperson befindet.

## Claims

1. A method for scheduling and rescheduling interventions by an operator (150) in an environment (100) exposed to radiation, in particular to ionising radiation, implementing a system, including:
a. a supervision centre (160) comprising a processor (161) memory means, display means (162) and means for accessing a network;
b. an individual detector (151), in particular a radiation meter, linked to the operator, capable of obtaining a measurement of the exposure intensity, and including means for addressing said measurement on the network intended for the supervision centre (160);
d. means (130) for geolocating the individual detector (151), comprising an identification means linked to said detector, in particular a radio frequency tag;
f. a connection terminal (152), connected to the network, and available to the operator (150);
g. a scheduling file (221), saved in the memory means and comprising the list, the duration, the location and the sequencing of the tasks of the operator;
h. a fixed detector (121, 122) capable of measuring an exposure intensity, connected to the network, of fixed location in the environment and targeting an area of said environment;
said method comprising steps of:
i. acquiring (210) a map called initial map of the intensity of exposure in the environment and saving it in the memory means;
ii. acquiring (230) at a first frequency the information from the individual detector associated with the geolocation information of said detector and saving them in a history file (231);
iii. processing (240) the data contained in the history file by the processor and obtaining:
iii.a an update of the map (211) at a second frequency less than the first frequency and saving this update;
iii.b an update of the operator exposure information at a third frequency less than the first frequency, saving this update in an operator tracking file (241);
iv. displaying the updated data on the display means of the supervision station.
V. acquiring (220) an initial scheduling and saving it in the scheduling file (221);
vi. acquiring (250) a measurement of the exposure intensity in the area covered by the fixed detector at a fourth frequency;
vii. updating the map using information acquired in step vi) ;
**characterised in that** the processing step iii) (240) comprises grouping the measurements by operator, by location and by date and the processing of the measurements by group thus obtained, and comprises a step of summing the exposure over time, starting from a date of origin, in order to determine, the amount of ionising radiation to which the operator has been exposed until a final summation date, and comparing the exposure of the operator with respect to the task carried out and the tasks yet to be carried out.

2. The method according to claim 1, wherein the system comprises a measuring device (170) in the environment capable of measuring an exposure intensity and including geolocation means, comprising the steps of:
viii. displacing (260) the movable measuring device to a determined location in the environment;
ix. acquiring (265) an exposure measurement carried out by the movable measuring device;
x. updating the map using the measurement carried out in step ix).

3. The method according to claim 1, including a step of:
xi. transmitting information from the supervision station to the connection terminal.

4. The method according to claim 1, wherein the system includes a video surveillance camera (181, 182), connected to the network, and observing an area of the environment, comprising a step of:
xii. displaying information from the video surveillance camera on the display means of the supervision station and wherein information from the map are superimposed on the display from the video surveillance camera.

5. The method according to claim 1, wherein:
- the first measurement transmission period corresponding to the first frequency is less than 1 second;
- the refresh period corresponding to the second and the third frequency is less than 5 seconds.
- the period corresponding to the fourth frequency is less than 10 seconds.

6. The method according to claim 1, comprising steps of:
xiii. acquiring the individual detector geolocation at a fifth frequency higher than the first frequency;
xiv. calculating the speed of movement of the operator to which said detector is linked;
and comprising before saving data from the individual detector in step ii) a data consistency test taking into account the operator's speed of movement and several successive measurements of his geolocation.

7. The method according to claim 2, wherein the processing carried out in the processing step iii) includes the measurement of exposure intensity carried out by the fixed detector and the measurement obtained by the movable device.

8. The method according claim 1, wherein the connection terminal (152) is a computer tablet, an augmented-reality optical device, in particular a helmet visor, or a connected watch.

9. The method according to claim 8, wherein the mobile terminal is a connected watch, comprising a step of:
xv. transmitting information to the operator's watch so that its dial is coloured with a colour that reflects the exposure intensity of the map in the area where the operator is located.
